# EUROPÄISCHE PATENTANMELDUNG

(11) **EP 0 860 977 A2**
(43) Veröffentlichungstag der Anmeldung: **26.08.1998**
(21) Anmeldenummer: 98440031.7
(22) Anmeldetag: 19.02.1998
(51) Int. Cl.: H04M 15/28

(54) **Verfahren zur Gebühreninformation sowie Vergebührungseinrichtung, Teilnehmerendgerät und Diensteinrichtung**

(30) Priorität: 21.02.1997 DE 19706579
(71) Anmelder: ALCATEL ALSTHOM COMPAGNIE GENERALE D'ELECTRICITE, 75008 Paris (FR)
(72) Erfinder: Krank, Lothar, 71229 Leonberg (DE); Stahl, Uwe, 71229 Leonberg (DE); Lautenschlager, Wolfgang, 71287 Weissach/Flacht (DE); Weik, Hartmut, 70195 Stuttgart (DE)
(74) Vertreter: Zinsinger, Norbert

(57) **Zusammenfassung**

Die Erfindung betrifft ein Verfahren zur Information eines Teilnehmers (SUB1) über Gebühren für die Inanspruchnahme von einer Kommunikationsverbindung zugeordneten Telekommunikationsdienstleistungen sowie eine Vergebührungseinrichtung (CHARGE), ein Teilnehmerendgerät (TE4) und eine Diensteinrichtung zur Durchführung des Verfahrens. Die Vergebührungseinrichtung (CHARGE) empfängt eine oder mehrere der Kommunikationsverbindung zugeordneten Vergebührungsnachrichten (MP) und berechnet während des Bestehens der Kommunikationsverbindung mittels diesen Nachrichten (MP) die für die Kommunikationsverbindung aufgelaufenen Gebühren (CH). Den berechneten Gebühren (CH) wird von der Vergebührungseinrichtung (CHARGE) weiter ein akustisches Signal zugeordnet und ein dem zugeordneten akustischen Signal entsprechendes elektrische Signal (ES) erzeugt. Das akustische Signal wird dem Teilnehmer (SUB1) sodann mittels einem von dem elektrischen Signal (ES) angesteuerten Schallwandler (LS) übermittelt.

## Beschreibung

Die Erfindung betrifft ein Verfahren zur Information eines Teilnehmers über Gebühren für die Inanspruchnahme von einer Kommunikationsverbindung zugeordneten Telekommunikationsdienstleistungen nach dem Oberbegriff von Anspruch 1, eine Vergebührungseinrichtung nach dem Oberbegriff von Anspruch 5, ein Teilnehmerendgerät zum Anschluß an ein Kommunikationsnetz nach dem Oberbegriff von Anspruch 6 und eine Diensteinrichtung eines Kommunikationsnetzes nach dem Oberbegriff von Anspruch 8.

Die übliche Vergebührung von Telekommunikationsdienstleistungen in Fernsprechnetzen wird beispielsweise in dem Kapitel "3.4.1. Knotenvermittlungsstelle" aus dem Buch "Grundlagen der Vermittlungstechnik", Gerd Siegmund, R. v. Decker's Verlag, G. Schenck, 1991, Seiten 93 bis 94, beschrieben.

Beim Verbindungsaufbau wird die Tarifzone der aufzubauenden Kommunikationsverbindung ermittelt und ein Zählimpulsgeber entsprechend eingestellt. Während des Bestehens einer Kommunikationsverbindung werden sodann von diesem Zählimpulsgeber über die Zweidrahtleitung im Sprachkreis Zählimpulse übertragen. Die Taktrate des Zählimpulsgebers entspricht hierbei der beim Verbindungsaufbau ermittelten Tarifzone, wobei jeder Gebührenimpuls die Anrechnung einer Gebühreneinheit für die Inanspruchnahme des Telekommunikationsdienstes, nämlich der Sprachverbindung, repräsentiert.

Diese Gebührenimpulse können über die Zweidrahtleitung im Sprachkreis auch dem rufenden Teilnehmerendgerät zugänglich gemacht werden. Durch die Auswertung der Anzahl solcher empfangenen Gebührenimpulse kann dieses Endgerät sodann die für die Kommunikationsverbindung aktuell angefallenen Gebühren berechnen und diese mittels einer Gebührenanzeige dem Teilnehmer sichtbar machen.

Ein Nachteil dieser Lösung besteht nun darin, daß das Display, der die berechneten Gebühren anzeigt, während des Gesprächs nicht im Auge behalten werden kann. So ist beispielsweise bei vielen Endgeräten der Display in den Hörer integriert. Dadurch kann lediglich am Ende eines Gesprächs festgestellt werden, welche Gebühren angefallen sind. Die Kosten lassen sich somit während des Gesprächs nicht verfolgen und damit auch nicht beeinflussen.

Der Erfindung liegt nun die Aufgabe zugrunde, die Übermittlung von Informationen über die aktuellen Kosten der Inanspruchnahme von Telekommunikationsdiensten zu verbessern.

Diese Aufgabe wird gelöst durch ein Verfahren zur Information eines Teilnehmers über Gebühren für die Inanspruchnahme von einer Kommunikationsverbindung zugeordneten Telekommunikationsdienstleistungen nach der Lehre von Anspruch 1, durch eine Vergebührungseinrichtung, ein Teilnehmerendgerät und eine Diensteinrichtung eines Kommunikationsnetzes nach der Lehre von Anspruch 5, 6 bzw. 8.

Der Grundgedanke der Erfindung besteht hierbei darin, die berechneten Gebühren nicht wie bisher dem Teilnehmer beispielsweise mittels eines Displays anzuzeigen, sondern den berechneten Gebühren ein akustisches Signal zuzuordnen und dieses Signal sodann an den Teilnehmer zu übermitteln.

Dies bringt den Vorteil mit sich, daß der Teilnehmer auch während des Gesprächs jederzeit über die aktuellen Gebühren informiert werden kann.

Vorteilhafte Ausführungsbeispiele der Erfindung sind den Unteransprüchen zu entnehmen.

Im folgenden wird die Erfindung anhand zweier Ausführungsbeispiele unter Zuhilfenahme beiliegender Zeichnungen näher beschrieben.
- Fig.1: zeigt ein Blockschaltbild eines Kommunikationssystems.
- Fig.2: zeigt ein Blockschaltbild eines erfindungsgemäßen Teilnehmerendgerätes für das Kommunikationssystem nach Fig. 1.
- Fig. 3: zeigt ein Blockschaltbild einer erfindungsgemäßen Diensteinrichtung für das Kommunikationssystem nach Fig. 1.

Im folgenden ersten Ausführungsbeispiel wird die Durchführung des erfindungsgemäßen Verfahrens mittels einer erfindungsgemäßen Vergebührungseinrichtung erläutert, die in einem erfindungsgemäßen Endgerät angeordnet ist.

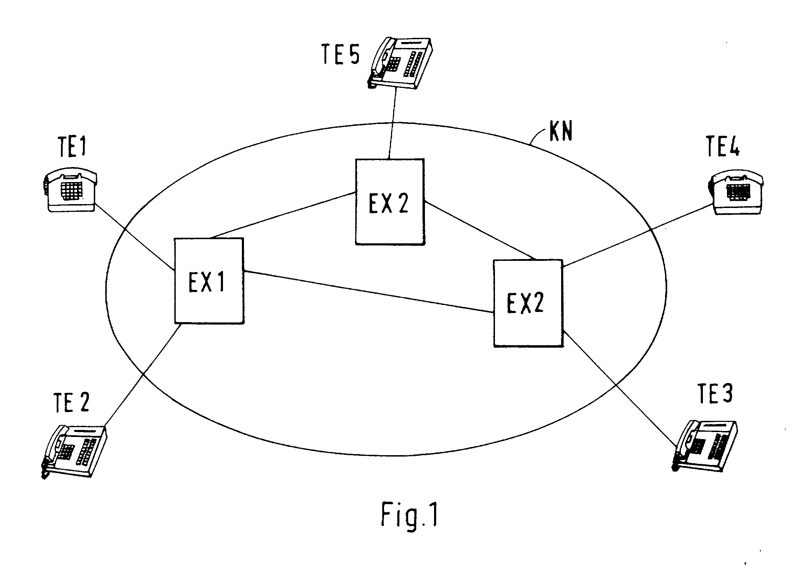

Fig. 1 zeigt ein Kommunikationssystem mit einem Kommunikationsnetz KN und fünf mit diesem verbundene Endgeräte TE1 bis TE5. Das Kommunikationsnetz KN weist mehrere miteinander vermaschte oder verbundene Vermittlungsstellen auf, von denen drei Vermittlungsstellen EX1 bis EX3 gezeigt sind.

Bei dem Kommunikationsnetz KN handelt es sich hier um ein übliches öffentliches Fernsprechnetz und bei den Vermittlungsstellen EX1 bis EX3 um übliche Vermittlungsstellen für solch ein Fernsprechnetz. Das digitale Vermittlungssystem A1000 S12 von Alcatel kann beispielsweise als eine solche Vermittlungsstelle verwendet werden.

Es ist jedoch auch möglich, daß das Kommunikationsnetz KN von mehreren öffentliche und/oder privaten Kommunikationsnetzen gebildet wird. Solche verschiedenen, miteinander verbundenen Kommunikationsnetze können beispielsweise die Netze unterschiedlicher Netzbetreiber, sowohl im Teilnehmeranschlußbereich als auch im Fernbereich, sein. Private Netze können hierbei beispielsweise auch Firmennetze sein, die zusätzlich Miet-oder Wählleitungen anderer Kommunikationsnetze verwenden.

Es ist auch vorteilhaft, die Erfindung nicht nur im Bereich der Fernsprechnetze sondern für Kommunikationsnetze allgemein einzusetzen, beispielsweise auch für Netze, die der Übertragung von Daten, Videosignalen oder gemischten Formen von Information dienen, also beispielsweise Sprache, Video und Daten zusammen übertragen.

Bei den Endgeräten TE1 bis TE5 handelt es sich um übliche Endgeräte für den Anschluß an ein Fernsprechnetz, also beispielsweise um Telefonapparate, Mobilfunk-Endgeräte, Faximiligeräte oder mit einer entsprechenden Modem- oder ISDN-Karte (ISDN = Integrated Services Digital Network) ausgestattete Computer.

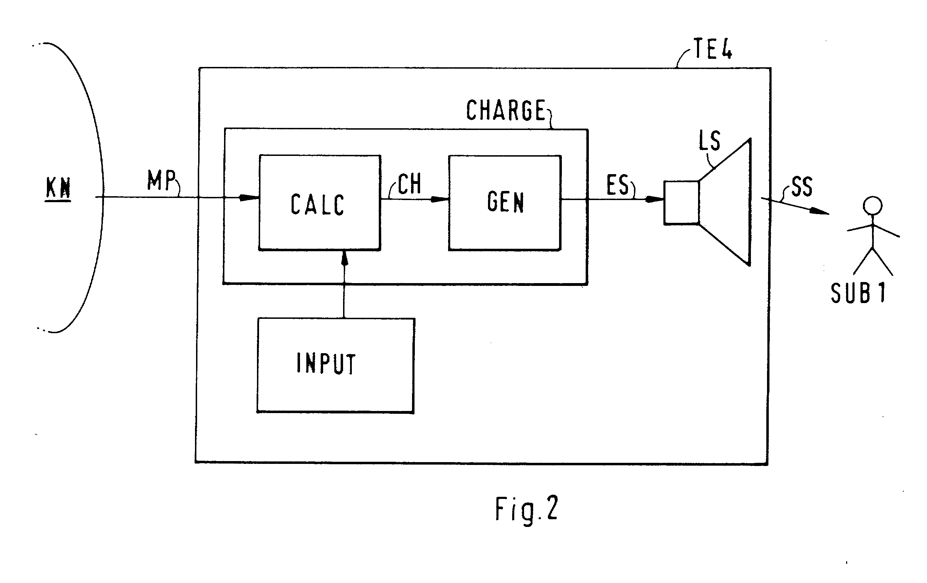

Fig. 2 zeigt nun eine detailliertere Darstellung des Endgerätes TE4, bei dem es sich um ein erfindungsgemäß ausgestattetes Endgerät handelt.

Das Endgerät TE4 weist eine Vergebührungseinrichtung CHARGE, einen Schallwandler LS und eine Eingabeeinrichtung INPUT auf. Das Endgerät TE4 wird von einem Teilnehmer SUB1 bedient. Die Vergebührungseinrichtung CHARGE weist eine Recheneinheit CALC und einen Signalerzeuger GEN auf.

Die Recheneinheit CALC empfängt Vergebührungsnachrichten MP, die über den Teilnehmeranschluß von der dem Endgerät TE4 zugeordneten Teilnehmervermittlungsstelle EX2 an das Endgerät TE4 gesendet werden. Bei den Vergebührungsnachrichten MP handelt es sich um die von der Teilnehmervermittlungsstelle EX2 über den Sprachkreis gesendeten Gebührenimpulse, wenn es sich bei dem Endgerät TE4 um ein Endgerät für einen analogen Teilnehmeranschluß handelt.

Handelt es sich um einen ISDN Anschluß, so handelt es sich bei den Vergebührungsnachrichten MP um die über den ISDN D-Kanal übermittelten Gebührennachrichten (Advice of Charge Nachrichten).

Es ist jedoch auch möglich, daß eine solche Vergebührungsnachricht MP nur einmal, beispielsweise beim Verbindungsaufbau, an das Endgerät TE4 gesendet wird und hierbei Daten über den Tarif für die gewählte Telekommunikationsdienstleistung, also beispielsweise die Gebühren pro Zeiteinheit oder eine Fixgebühr für die Inanspruchnahme des gewählten Telekommunikationsdienstes, in der Vergebührungsnachricht MP übermittelt wird. Vergebührungsnachrichten MP, die solche Gebühreninformationen enthalten, können auch mehrmals während des Bestehens der Kommunikationsverbindung von der Teilnehmervermittlungsstelle EX2 an das Endgerät TE4 gesendet werden, beispielsweise wenn der Tarif sich während des Bestehens der Verbindung ändert oder wenn ein Fixbetrag bei der Inanspruchnahme eines Telekommunikationsdienstes anfällt.

Unter Telekommunikationsdiensten, für deren Inanspruchnahme von der Vermittlungsstelle EX2 Vergebührungsnachrichten MP an das Endgerät TE4 gesendet werden, sind hierbei sowohl Kommunikationsdienste, also Gebühren für die Kommunikationsverbindung, als auch Dienste zu verstehen, wie beispielsweise ein über IN bereitgestellter Informationsdienst.

Die empfangenen Vergebührungsnachrichten MP werden von der Recheneinheit CALC erfaßt, aufgewertet und mit ihnen während des Bestehens einer Kommunikationsverbindung die aktuelle Gebühr für die Summe der bisher während der Verbindung in Anspruch genommenen Telekommunikationsdienstleistungen berechnet.

Handelt es sich bei den Vergebührungsnachrichten MP um Gebührenimpulse, so werden diese vom Verbindungsaufbau an aufaddiert und die berechnete Summe der Gebührenimpulse ist ein Maß für die aktuell aufgelaufenen Gebühren.

Handelt es sich bei den Gebühreninformationen um Informationen über einen Tarif, so werden die aktuell aufgelaufenen Gebühren durch Multiplikation dieses Tarifs mit der seit dem Verbindungsaufbau verstrichenen Zeit berechnet.

Handelt es sich bei den Gebühreninformationen um Informationen über einen angefallenen Fixbetrag, so wird die diesem Fixbetrag zugeordnete Gebühr bestimmt und auf die bereits während des Gesprächs angefallene Summe der Gebühren aufaddiert.

Bei Auftreten eines speziellen Ereignisses werden die berechneten, aktuellen Gebühren als Gebühren CH an den Signalerzeuger GEN gesendet. Die eigentliche Berechnung der aufgelaufenen Gebühren kann hierbei ständig während des Bestehens der Verbindung erfolgt oder von dem speziellen Ereignissen getriggert erfolgen.

Es bestehen mehrere Möglichkeiten, wann oder wodurch dieses oder diese speziellen Ereignisse erfolgen können:
- Die speziellen Ereignisse werden von der Recheneinheit CALC periodisch während des Bestehens der Verbindung erzeugt. Die Ereignisse werden beispielsweise alle 30 Sekunden erzeugt, d. h. alle 30 Sekunden werden die aktuell berechneten Gebühren an den Signalerzeuger GEN übermittelt.
- Die speziellen Ereignisse werden von der Recheneinheit CALC periodisch in Abhängigkeit von den berechneten, aktuell aufgelaufenen Gebühren erzeugt. Es wird jedesmal dann ein Ereignisse erzeugt, wenn seit dem letzten Ereignis wieder ein bestimmter Gebührenbetrag angefallen ist. Beispielsweise wird ein Ereignis erzeugt, wenn 1, 2, 3, .. DM an Gebühren angefallen sind.
- Ein spezielles Ereignisse wird erzeugt, wenn die aktuell aufgelaufenen Gebühren eine festgelegte Gebührenschwellen erreichen. In diesem Fall ist es auch möglich, daß dem Signalerzeuger nur das Erreichen dieser Gebührenschwelle gemeldet wird.

Die für die Erzeugung der speziellen Ereignisse variablen Parameter wie Zeitperiode, Gebührenperiode oder Gebührenschwelle sowie die Art der Gebührenerzeugung sind über die Eingabeeinrichtung INPUT einstellbar. Es ist jedoch auch möglich, auf die Eingabeeinrichtung INPUT zu verzichten oder nur eine der oben aufgezählten Möglichkeiten der Ereigniserzeugung vorzusehen.

Der Signalerzeuger GEN ordnet der berechneten Gebühr CH ein akustisches Signal zu und erzeugt ein diesem akustisches Signal entsprechendes elektrisches Signal ES.

Der berechneten Gebühr CH wird beispielsweise die sprachliche Wiedergabe der Gebührenhöhe der Gebühr CH oder eines Äquivalents zu der Gebührenhöhe (Anzahl der Gebühreneinheiten) zugeordnet. Diese sprachlich Wiedergabe der Gebührenhöhe wird hierbei aus bereits vorher in dem Signalerzeuger GEN abgespeicherten Sprachfragmenten zusammengesetzt, die mittels einem Zuordnungsalgorithmus jeweils der übermittelten Gebühr CH zugeordnet werden.

Dies Zuordnung gestaltet sich hierbei besonders einfach und der für die Speicherung der Fragmente benötige Speicherplatz ist recht gering, wenn die Ereignisse gebührenperiodisch erzeugt werden.

Es ist auch möglich, daß die sprachliche Wiedergabe bestimmter Fixaussagen, wie ,,Gebührenschwelle erreicht", als Sprachsignal zugeordnet werden. Weiter kann der berechneten Gebühr CH aber auch ein bestimmtes Tonsignal oder eine Abfolge von Tonsignalen als Sprachsignal zugeordnet werden.

Es ist weiter möglich, daß die Art der zugeordneten Sprachsignale mittels der Eingabeeinrichtung INPUT vom Teilnehmer SUB1 eingestellt werden kann.

Die Eingabeeinrichtung INPUT wird beispielsweise von dem Tastenfeld oder Tastaturfeld des Endgerätes TE4 gebildet. Es ist jedoch auch möglich, daß die Eingabeeinrichung INPUT über eine Spracherkennungseinrichtung verfügt und Eingaben durch Spracheingabe erfolgen.

Handelt es sich bei dem Endgerät TE4 um ein Telefongerät, so wird als Schallwandler LS vorteilhafterweise der im Telefonhörer angeordnete Lautsprecher des Sprachkreises verwendet. Das elektrisches Signal ES wird hierzu vor diesem Lautsprecher in den Sprachkreis eingekoppelt.

Die Information eines Teilnehmers über die von ihm für eine Verbindung in Anspruch genommen Telekomunikationsdienstleistung erfolgt somit wie folgt: Der Teilnehmer SUB1 baut mit dem Teilnehmerendgerät TE4 eine Kommunikationsverbindung im Kommunikationsnetz KN auf und nimmt Telekommunikationsdienstleistungen im Kommunikationsnetz KN in Anspruch. Das Kommunikationsnetz KN sendet an das Endgerät TE4 beim Verbindungsaufbau und/oder während des Bestehens der Kommunikationsverbindung ein oder mehrere Vergebührungsnachrichten MP. Die Recheneinheit CALC berechnet aus diesen Vergebührungsnachrichten MP die aktuellen, aufgelaufenen Gebühren CH, denen der Signalerzeuger GEN ein akustisches Signal zuordnet und ein diesem zugeordneten akustischen Signal entsprechendes elektrisches Signal erzeugt. Dieses elektrische Signal wird vor dem Schallwandler LS eingekoppelt und von diesem in ein Schallsignal SS umgewandelt, das natürlich ebenfalls dem zugeordneten akustischen Signal entspricht. Dieses Schallsignal wird sodann vom Teilnehmer SUB1 empfangen.

Im zweiten Ausführungsbeispiel wird nun die Durchführung des erfindungsgemäßen Verfahrens mittels einer erfindungsgemäßen Vergebührungseinrichtung erläutert, die in einer erfindungsgemäßen Diensteinrichtung angeordnet ist.

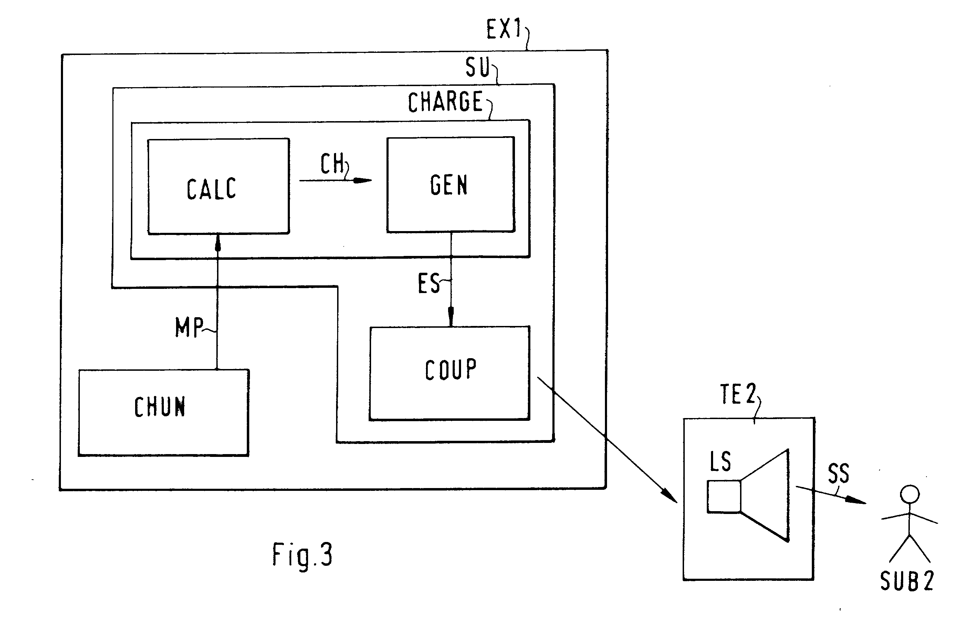

Fig. 3 zeigt eine detailliertere Darstellung der Vermittlungsstelle EX1 und des Endgerätes TE2.

Die Vermittlungsstelle EX1 weist neben den üblichen Funktionsgruppen einer Vermittlungsstelle einen Gebührenermittler CHUN und eine Diensteinrichtung SU mit der Vergebührungseinrichtung CHARGE und einem Koppler COUP auf. Das Endgerät TE2 weist den Schallwandler LS auf und wird von einem Teilnehmer SUB2 bedient. Die Vergebührungseinrichtung CHARGE weist die Recheneinheit CALC und den Signalerzeuger GEN auf.

Der Gebührenermittler CHUN ermittelt den für eine Verbindung anzuwendenden Tarif und erzeugt die Vergebührungsnachrichten MP. Hierfür wertet er beispielsweise beim Verbindungsaufbau die Rufnummer des gerufenen Teilnehmers auf.

Die Vergebührungseinheit CHARGE ist gemäß Fig. 2 aufgebaut.

Der Koppler COUP koppelt das Signal ES in denjenigen Sprachkanal ein, der während des Bestehens einer Kommunikationsverbindung vom Endgerät TE2 über die Vermittlungsstelle EX1 zwischen dem gerufenen Endgerät und dem Endgerät TE2 in Richtung des Endgerätes TE2 aufgebaut ist. Das eingekoppelte Signal ES wird somit über diesen Sprachkanal mit zum Schallwandler LS im Endgerät TE2 übertragen und von dort als akustisches Signal SS an den Teilnehmer SUB2 übertragen.

Es ist auch möglich, daß die Diensteinheit SU und der Koppler COUP nicht in der Teilnehmervermittlungsstelle EX1 des Endgerätes TE2 integriert sind, sondern daß sie in einer anderen Vermittlungsstelle des Kommunikationsnetzes KN oder in einem abgesetzten Dienstrechner, beispielsweise in einer Dienststeuereinrichtung (Service Control Point = SCP) innerhalb einer IN-Architektur (IN = Intelligent Network) integriert sind. Im Fall, daß der Dienst der Diensteinheit mittels einer IN-Architektur erbracht wird, ist es weiter möglich, daß der Koppler COUP und der Signalerzeuger GEN getrennt von der Recheneinheit CALL angeordnet sind und so beispielsweise in einem Dienstunterstützungssystem (IP = Intelligent Peripheral) angeordnet sind. Das Dienstunterstützungssystem steht hierbei gleichwertig neben der Dienststeuereinrichtung und es ist auch möglich, daß mehrere Dienststeuereinrichtungen gemeinsam auf ein Dienstunterstützungssystem zugreifen und dessen Resourcen gemeinsam nutzen.

## Patentansprüche

1. Verfahren zur Information eines Teilnehmers (SUB1, SUB2) über Gebühren für die Inanspruchnahme von einer Kommunikationsverbindung zugeordneten Telekommunikationsdienstleistungen, wobei bei dem Verfahren von einer Vergebührungseinrichtung (CHARGE) eine oder mehrere der Kommunikationsverbindung zugeordneten Vergebührungsnachrichten (MP) empfangen werden und während des Bestehens der Kommunikationsverbindung mittels der oder den empfangenen Vergebührungsnachrichten (MP) die für die Kommunikationsverbindung aufgelaufenen Gebühren (CH) von der Vergebührungseinrichtung (MP) berechnet werden,
**dadurch gekennzeichnet**, daß den berechneten Gebühren (CH) von der Vergebührungseinrichtung (CHARGE) ein akustisches Signal zugeordnet und ein dem zugeordneten akustischen Signal entsprechendes elektrische Signal (ES) erzeugt wird und daß das akustische Signal mittels einem von dem elektrischen Signal (ES) angesteuerten Schallwandler (LS) dem Teilnehmer (SUB1, SUB2) übermittelt wird.

2. Verfahren nach Anspruch 1, dadurch gekennzeichnet, daß den berechneten Gebühren (CH) periodisch jeweils das akustische Signal zugeordnet und an den Teilnehmer (SUB1, SUB2) übermittelt wird.

3. Verfahren nach Anspruch 1, dadurch gekennzeichnet, daß die berechneten Gebühren (CH) mit einem Schwellwert verglichen werden und beim ereichen des Schwellwertes den berechneten Gebühren (CH) das akustische Signal zugeordnet und an den Teilnehmer (SUB1, SUB2) übermittelt wird.

4. Verfahren nach Anspruch 1, dadurch gekennzeichnet, daß den berechneten Gebühren (CH) ein diesen entsprechendes Sprachsignal als akustisches Signal zugeordnet wird.

5. Vergebührungseinrichtung (CHARGE) zur Information eines Teilnehmers (SUB1, SUB2) über Gebühren für die Inanspruchnahme von einer Kommunikationsverbindung zugeordneten Telekommunikationsdienstleistungen, mit einer Empfangseinrichtung (CALC) zum Empfang von Vergebührungsnachrichten (MP) und mit einer Recheneinrichtung (CALC), die so ausgestaltet ist, daß sie während des Bestehens der Kommunikationsverbindung mittels einer oder mehrere empfangenen Vergebührungsnachrichten (MP) die für die Verbindung aufgelaufenen Gebühren (CH) berechnet,
**dadurch gekennzeichnet**, daß die Vergebührungseinrichtung (CHARGE) mit einem Signalerzeuger (GEN) versehen ist, der so ausgestaltet ist, daß er den berechneten Gebühren (CH) ein akustisches Signal zuordnet und ein dem zugeordneten akustischen Signal entsprechendes elektrische Signal (ES) erzeugt.

6. Teilnehmerendgerät (TE4) zum Anschluß an ein Kommunikationsnetz (KN) mit einer Vergebührungseinrichtung (CHARGE) nach Anspruch 5 und mit einem Schallwandler (LS), der so angeordnet und ausgestaltet ist, daß er von dem elektrischen Signal (ES) angesteuert wird und das akustische Signal mittels ihm an den Teilnehmer (SUB1) übermittelbar ist.

7. Teilnehmerendgerät (TE4) nach Anspruch 6, dadurch gekennzeichnet, daß der Schallwandler (LS) der für die Kommunikation über die Kommunikationsverbindung verwendete Schallwandler ist.

8. Diensteinrichtung (SU) eines Kommunikationsnetzes (KN) mit einer Vergebührungseinrichtung (CHARGE) nach Anspruch 5 und mit einer Koppeleinrichtung (COUP), die so ausgestaltet ist, daß sie das elektrische Signal (ES) während des Bestehens der Kommunikationsverbindung in einen der Kommunikationsverbindung zugeordneten Sprachkanal einkoppelt.
